# EUROPEAN PATENT APPLICATION

(11) **EP 1 813 460 A1**
(43) Date of publication of application: **01.08.2007**
(21) Application number: 06009307.7
(22) Date of filing: 05.05.2006
(51) Int. Cl.: B60K 35/00

(54) **Support plate for an electronic display**

(30) Priority: 31.01.2006 ES 200600206
(71) Applicant: Precision Process Technology, S.A., 08210 Barcelona (ES)
(72) Inventor: Vila Ramirez, Narcis, 08210 Barcelona (ES)
(74) Representative: Isern-Jara, Nuria

(57) **Abstract**

Support plate (5), designed in particular to support an electronic display of an instrument panel (1) for motor vehicles, said support plate (5) being made up of a plastic mouldable body that has a housing section to frame an electronic display (4) and some means of electrical connection in order to electrically connect the electronic display (4) directly to a printed circuit board (9) onto which the support plate (5) is supported, characterised in that the electrical connection means are made up of one or more conductor tracks (6) integrated onto a surface of a section of the support plate (5) by means of the prior application of a metalising treatment to make the conductor of said conductor surface, so that said conductor tracks (6) make a bridge between a terminal block of the electronic display (4) and the printed circuit board (9).

## Description

### OBJECT OF THE INVENTION

The object of this invention is an electronic display support plate that incorporates significant innovations and advantages compared to other support plates that are used for the same purpose.

More specifically the new invention refers to a support plate, specifically aimed at supporting an electronic display of a motor vehicle instrument panel, said plate being made up of a mouldable plastic material body that has a housing section to frame an electronic display, together with connecting means to associate the electronic display with a printed circuit board onto which the support plate is supported.

### BACKGROUND TO THE INVENTION

The known instrument panels for vehicles are usually made up from mechanical and electronic components that carry a multitude of acoustic and visual indicators that help the driver to maintain an appropriate control of the vehicle. These components are usually indicators, translucent symbols, acoustic signals and electronic screens, the use of the latter increasing for speedometers due to its broad versatility in the configuration of images and the capacity of information. Meanwhile the manufacturers of these boards are continually supplying the market with an infinity of geometric designs, new mechanical features and electronic innovations; there are certain components that are already common in all of the instrument boards irrespective of their design. Briefly, an instrument board has a visible face that includes a relief pattern that is usually fitted to a lens. Behind this, there are indicators, dials, translucent symbols and screens as visual indicators. On the lower underlying part, in the part that is not visible a support plate is used (frequently also called the light guide, carcass or transflector) that provides the structural support and a light transmitter to a part of the above-mentioned elements, and in juxtaposition to them a printed circuit board (hereinafter referred to as PCB). The screen or display is usually housed under an opening in the relief and supported from underneath by means of the support plate. Due to the distance between the electronic display and the PCB a ribbon cable and/or conductor strips are needed to connect both elements to each other overcoming the distance of the space between them. One example of an instrument panel with these characteristics is described in the Invention Patent N° ES 2 013 961 in which the electrical connection of a central indicator is made by means of conductor elements.

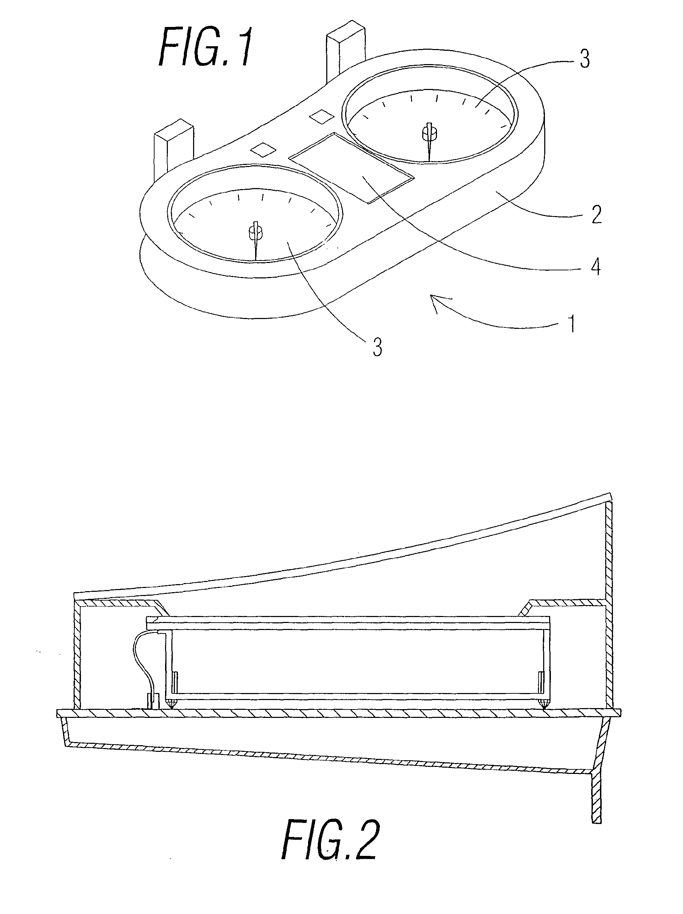

At the absolute bottom, a base cover is usually used to protect the group of components of the bottom; an assembly of the type here described being shown in Figure 2.

However, one common disadvantage of this assembly for this electronic display (supported on a support plate and connected to the PCB with a ribbon cable) is the difficulty for the automated assembly and connection during the production process due to the flexible nature of said cables, in fact, in the majority of cases, it requires a person to manually carry out said connection. On the other hand, the space that is needed in order to allow the assembly design to handle the ribbon cable can have a limitation to achieve a compact grouping together of the components.

In an attempt to simplify the above-mentioned concept of the inter-connection of the electronic display with the PCB, other assemblies of instrument panels use elastomeric connectors inserted in an element in the form of a column that makes a bridge between the display and the connector for the PCB. However, they tend to bend when they are compressed between the electronic display and the PCB. Said bending of the elastomeric connector can limit the density of the contact track or the space of the contacts. Consequently, the number of electrical conducts and the active graphics of the display are limited by a size given by the display. In addition, in the arrangements of the known state of the art, the instrument panel is completely assembled before trying the display, the functions of the circuit and the lining up between the support plate and the electronic display components. Consequently a fault is detected from the failure to line up the circuit, the entire assembly must be disconnected in order to carry out the repair process in order to solve the problems of malfunctioning and/or re-align the support plate and the electronic display components to produce the desired backlight effect. These repair processes are complex and expensive to carry out.

### DESCRIPTION OF THE INVENTION

The present invention has been developed for the purpose of providing a support plate that solves the previously stated disadvantages, moreover, providing other advantages that will be clear from the description which is attached below.

The support plate object of the invention, is aimed in particular at supporting an electronic display, for example, of the type that is housed in a motor vehicle instrument panel, said support plate consisting of a mouldable plastic material body that has a housing section to frame an electronic display and some means of electrical connection to electrically connect the electronic display to the printed circuit board onto which the support plate is supported. It is characterised by the fact that the means of electrical connection are made up from one or more integrated conductor tracks on the surface of a section of the support plate by means of the prior application of laser technology (LDS) or equally by bi-injection with a catalytically active polymer (MID), this meaning that said tracks form a part of the support plate itself making a single joint element, in such a way that said conductor tracks make a bridge between the electronic display terminal block and the printed circuit board.

In this way, the object of the invention attempts to solve the above-mentioned disadvantages by using a support plate that allows the electronic display to be connected directly to the printed circuit board without the need for flexible ribbon cables or additional rubber connectors, this meaning that the support plate itself acts as a conductor element for the electrical connection without the need for additional elements for the electrical conduction.

In addition, another advantageous aspect in accordance with the invention is allowing the assembly to be simplified by eliminating a component, the inter-connection between the support plate makes the handling and assembly with an automatic device much more viable, in such a way that there is a cost reduction in labour and production and the level of productivity is higher.

In accordance with another aspect of the invention, the conductor surface is located on a tab that protrudes from the front part and extends in a downward direction until fitting into the terminal block used for the connection with the printed circuit board.

Other characteristics and advantages of the support plate object of the present invention will be come clear from the present description of a preferred embodiment, but it is not exclusive, it illustrates by way of example, but the drawings attached are not by way of limitation, in which:

### BRIEF DESCRIPTION OF THE DRAWINGS

Figure 1 shows a drawing in perspective of the motor vehicle instrument panel which includes a digital display that is assembled on the support plate of the present invention.
Figure 2 shows a side elevation corresponding to a section of the assembly of an electronic display of an instrument panel represented in the previous figure;
Figure 3 shows a side elevation corresponding to the assembly of an electronic display assembled on the support plate;
Figure 4 shows a detailed view in section corresponding to a part of the previous figure that shows the area corresponding to the conductor tracks; and
Figure 5 shows a view in perspective of the electronic display assembly assembled onto the support plate and adjacent to the printed circuit board.

### DESCRIPTION OF THE PREFERRED EMBODIMENT

As and how described in Figure 1, an instrument panel, particularly for motor vehicles referred to in general with (1) is made up of a relief (2) that on the inside includes a plurality of indicators (3) for the driver, such as a speedometer and revolution counter, at least one electronic display (4) situated on the centre part of the board that provides complementary information located on a support plate (5) with a light source and transflector components.

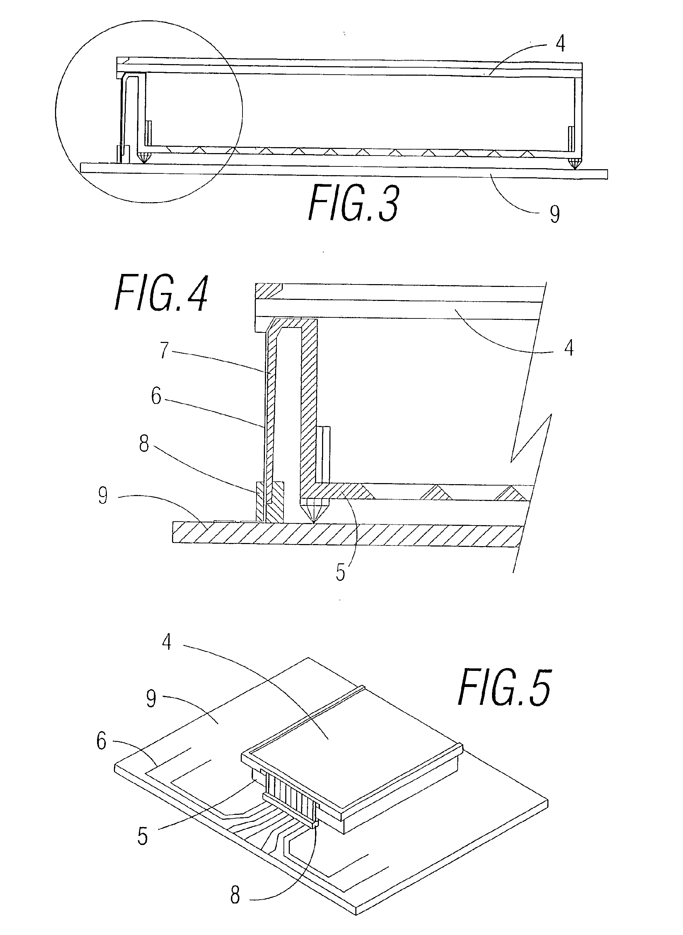

The support plate (5) is made from a mouldable plastic material that in addition has a mechanical function of fixing the electronic display (4) between other components and of transmitting the light under certain predetermined conditions, also providing conductivity on the connection band of the electronic display (4) by means of some electrically conductive tracks (6) integrated along a tab (7) located on a front side wall that protrudes from the support plate (5) and is arranged transversally to the printed circuit board (9) that directly connects to the connector or terminal block (8) of the printed circuit board (9), as can be seen with greater clarity in Figures 3 to 5. In this way reducing the number of components necessary for the instrument panel (1) assembly.

The different elements of the circuit that make up the printed circuit board (8) or conductor tracks (6) are not in themselves the object of the present invention for which reason their explanation has been omitted.

The integration of the electrical conductor tracks (6) on the support plate connection tab (7) without having to use additional elements for the connection is made on the basis of the possibility of generating metalised conductor layers directly onto the surface of the mouldable plastic piece. This is possible thanks to the use of already known technologies such as 'LDS' (Laser Direct Structuring) and 'MID' (Moulded Interconnect Device).

The technology known as 'LDS' is based on the fact that certain moulding polymers allow a selective activation of their surface by means of a laser treatment, so that a moulded piece can be adapted for metalising of tracks for circuits in a chemical bath once it has been attacked in the required areas of the surface. This technology does not require significant investments in so far as special tools, and brings great flexibility to changes in the design of the conductor tracks, as the laser tracing is programmed relatively quickly and simply, on the other hand it is aimed at low production volumes as the cycle time to make the conductor zone is high.

The 'MID' technology is based on the possibility of injecting a catalytically active polymer with another one that is not metalisable by means of a moulding process by industrial bi-injection, where the active polymer shapes the metalisable tracks in selective areas of the piece, which become conductors once they have been galvanised by a suitable chemical process. This technology is aimed at high volume production, where the level of investment required for bi-injection moulding tools is justified by the increased productivity that this technology brings.

Both technologies, LDS or MID, bring the possibility of not having to resort to the added locating of conductor tracks but the area of the piece that has been treated acts as a conductor element as and how it was highlighted in the object of the invention.

The details, shapes, sizes and other accessorial elements, likewise the materials used for the construction of the support plate of the invention can suitably be substituted for others that are technically equivalent and do not deviate from the essentials of the invention or the scope defined by the claims which are included below.

## Claims

1. Support plate (5), designed in particular to support an electronic display of an instrument panel (1) for motor vehicles, said support plate (5) being made up of a plastic mouldable body that has a housing section to frame an electronic display (4) and some means of electrical connection in order to electrically connect the electronic display (4) directly to a printed circuit board (9) onto which the support plate (5) is supported, **characterised in that** the electrical connection means are made up of one or more conductor tracks (6) integrated onto a surface of a section of the support plate (5) by means of the prior application of a metalising treatment to make the conductor of said conductor surface, so that said conductor tracks (6) make a bridge between a terminal block of the electronic display (4) and the printed circuit board (9).

2. Support plate (5), according to Claim 1, **characterised in that** the conductor surface is located on a tab (7) that protrudes from the front part of said support plate (5) and that it extends in a downward direction until fitting into a terminal block (8) used for the connection with the printed circuit board (9).
